# EUROPEAN PATENT SPECIFICATION

(11) **EP 4 630 668 B1**
(45) Date of publication and mention of the grant of the patent: **07.10.2026**
(21) Application number: 23820853.2
(22) Date of filing: 07.12.2023
(51) Int. Cl.: F01P 3/18, B60K 11/02, F01P 11/02, F01P 5/02, F02B 63/04, F28F 9/02, B60K 11/04, F28D 1/053, F28F 9/26

(54) **MODULAR COOLING SYSTEM COMPRISING A BUFFER TANK**
MODULARES KÜHLSYSTEM MIT PUFFERTANK
SYSTÈME DE REFROIDISSEMENT MODULAIRE COMPRENANT UN RÉSERVOIR TAMPON

(30) Priority: 08.12.2022 SE 2251437
(43) Date of publication of application: 15.10.2025
(73) Proprietor: Volvo Penta Corporation, 405 08 Göteborg (SE)
(72) Inventor: OLSON, Johan, 434 97 Kungsbacka (SE); MARTINS, Rodrigo Caus, 411 32 Göteborg (SE)
(74) Representative: Zacco Sweden AB
(86) International application number: PCT/EP2023/084642
(87) International publication number: WO 2024/121278

(56) References cited:
- EP-B1- 0 855 304
- EP-B1- 0 969 189
- EP-B1- 1 146 210
- CN-A- 106 285 897
- IT-A1- 201900 017 426
- US-A- 2 147 699

## Description

### TECHNICAL FIELD

The present invention relates to a modular cooling system to be used with a power source, e.g. a combustion engine, an electrical motor or a fuel cell. The cooling system comprises a buffer tank and may be used for vehicles or stationary installations. The cooling system and the buffer tank can be configured for the power output and power usage of the power source, and will save space and weight.

### BACKGROUND ART

Combustion engines are mostly provided with a cooling system comprising a radiator through which a cooling liquid is flowing. The cooling liquid is normally water based consisting of water and an anti-freeze component, such as an alcohol, but oil-based cooling liquids are also used in some installations. The radiator is often provided with a cooling fan that can increase the air flow through the radiator in order to increase the cooling capacity of the radiator and thus of the cooling system. The cooling system may also be provided with a temperature sensor of some type that can start the cooling fan when an increased cooling capacity is required.

A cooling system is often designed for a worst case scenario such that the cooling system will be able to allow the combustion engine to run at full load over the complete specified temperature range. For a standard vehicle, the size of the radiator is fixed and cannot be changed, and the vehicle is delivered with an installed cooling system comprising a radiator with a fixed size and cooling capacity. For a standard vehicle, such a solution is mostly useful, since e.g. a truck is used in different conditions, where some conditions will resemble a worst case scenario, e.g. at summer or when driving uphill steep inclines. For other types of vehicles, such as container handlers or terminal tractors, a standard cooling system including a standard radiator may be over-dimensioned since the vehicle is only used with a low load or under short time intervals.

For other installations, e.g. for industrial installations where a power system comprising an internal combustion engine or another type of power source is used to drive a generator as a back-up system for electricity or for driving a pump at a remote location, the power system is often sold as a complete package with a combustion engine, a cooling system comprising a radiator and an engine control system. The radiator is adapted for the size and power output of the engine, and for the complete temperature range for the installation. Depending on the intended use of the power system and on the intended location, the cooling system may be over-dimensioned. In some cases, the customer engine may e.g. only use part of the available output power, and the engine may e.g. never deliver more than 50% of the maximum power. In another example, the engine may be used intermediately such that it delivers peak power for a few minutes and then run on idle for most of the time. In such power systems, the standard radiator is often too large for the actual use, and will induce unnecessary weight, size and cost.

The producer or original equipment manufacturer can in such a case design the radiator and the power system himself, by buying parts for the power system from different suppliers. This may be cost-effective but may result in a power system that is not working optimal since it may be difficult for the designer to dimension the cooling system adequately. Often, this results in a cooling system that is over-dimensioned since the designer of the system wants to be on the safe side. There may also be a risk that the selected radiator is too small such that the engine does not run within specifications.

EP 0 969 189 B1 discloses a cooling assembly for installation in an engine compartment of an internal combustion engine vehicle.

IT 2019 0001 7426 A1 discloses a cooling system for a current generator comprising a first plurality of cooling modules each comprising a radiator, containing coolant liquid, and a blower means associated with the radiator for carrying out convective cooling of the coolant.

US 2 147 699 A discloses an engine cooling system comprising an overflow valve with a pressure valve and an auxiliary tank outside the circulating system.

EP 1 146 210 B1 discloses a cooling unit comprising a cooling network, a refrigerant cooler with collecting tanks, a charge cooler and other coolers or heat exchangers. The cooling unit has front and rear walls and at least one compensation container for refrigerant.

EP 0 855 304 B1 discloses a module consisting of a central water cooler with plastic radiator tanks on either side, and a plastic ventilator hood for the cooler.

CN 106 285 897 A discloses a heat radiator for a V type fuel gas powering and compression integrated machine. The heat radiator is provided with a three-level heat radiating structure composed of heat radiating components, an air director and an air barrel.

Even if these systems often function well, there is room for an improved cooling system for a power source.

### DISCLOSURE OF INVENTION

An object of the invention is therefore to provide an improved cooling system for a power source. A further object of the invention is to provide a vehicle comprising such a cooling system.

The solution to the problem according to the invention is defined by the features of the main claims. The other claims contain advantageous further developments of the cooling system.

In a cooling system for a power source, comprising a modular heat exchanger module provided with a cooling fan, an inlet tubing, an outlet tubing and an expansion vessel, where the modular heat exchanger module comprises a first end part releasably connected to a first radiator section which is releasably connected to a second end part, where the modular heat exchanger module is provided with an inlet opening and an outlet opening, wherein the cooling system comprises a buffer tank, the object of the invention is achieved in that the buffer tank is arranged in the outlet tubing between the modular heat exchanger and the power source, downstream of the modular heat exchanger.

By this first embodiment of the cooling system, a cooling system can be assembled to the required specifications of a power system, and to the actual power output of the power source. A producer of a cooling system is thus not bound to use a standard radiator, but can assemble a cooling system to the actual needs of the power system. Several heat exchanger modules can be assembled in parallel, such that the effective cooling surface of the radiator can be selected freely, and the buffer tank can be dimensioned to the intermittent power output of the power source. By using only a few part numbers for the modular heat exchanger combined with a buffer tank, a flexible solution where the size of the modular heat exchanger and the buffer tank can be adapted to the actual use conditions of the power source is obtained.

That the buffer tank is arranged in the outlet tubing between the modular heat exchanger and the power source, downstream of the modular heat exchanger allows for an increase of the volume of the cooling system such that it will take a longer time to overheat the cooling liquid. When the power source is only used for short durations, the buffer tank will allow for a smaller heat exchanger, which will save cost and space. Further, the buffer tank will provide increased cooling capacity for power bursts while the modular heat exchanger module(s) will provide cooling capacity for low power periods. During power bursts, the increase in temperature of the cooling liquid can be dissipated over a longer period of time compared to a system without a buffer tank.

A buffer tank heat exchanger may be arranged inside the buffer tank, wherein the tank heat exchanger is connected to a heat consumer outside of the cooling system. For a vehicle, it may be possible to extract heat to a heat consumer outside of the cooling system. One example of a heat consumer is a cabin heating system during times when the power source, e.g. the engine, is not in operation. Having the possibility to transfer heat from the buffer tank to a heat consumer such as the cabin heating system can be valuable when the power source is turned off using a start-stop system. In this way, the power source does not need to be turned on again during longer stops, such as in queues, in order to heat the cabin or other parts of the vehicle, thus saving fuel and reducing the environmental impact.

For a vehicle, as well as for other applications described herein, the buffer tank can thus be used as a heat or energy storage where the heat can be transferred to other parts that require heating when the power source is turned off.

In one example, the modular heat exchanger module further comprises an intermediate part and a second radiator section, where the outlet opening of the first radiator section is releasably connected to an inlet opening of the intermediate section, where an outlet opening of the intermediate section is releasably connected to an inlet opening of the second radiator section and where an outlet opening of the second radiator section is releasably connected to the inlet opening of the second end part. In this example, several radiator sections can be assembled in series, such that the effective radiator surface can be increased. Modular heat exchanger modules can also be assembled in parallel, such that the effective radiator surface can be further increased if required. By arranging radiator sections both in series and in parallel, the flow through the heat exchanger can be controlled. The number of modular heat exchanger modules is selected in dependency of the rated power of the power source and on the anticipated use of the power source.

The buffer tank is arranged downstream of the modular heat exchanger, such that the cooling liquid in the buffer tank has a relatively low temperature. In one example, the inlet for the cooling liquid is arranged at the upper section of the buffer tank, and the outlet for the cooling liquid is arranged at the lower section of the buffer tank. This arrangement will ensure than the cooling liquid in the buffer tank is mixed properly, such that no sections with still-standing cooling liquid is created and that the complete volume of the buffer tank is used.

The volume of the buffer tank is dimensioned based on drive cycle analysis of the power source and on the total volume of the cooling system. Depending on the emitted power of the power source, and on the duration of the emitted power, the required cooling capacity of the cooling system can be determined.

In some power systems, the output power from the power source is relatively low and continuous, such as in a stationary system driving a pump or a generator. In such a case, the cooling capacity is easy to predict and is constant, such that a buffer tank is not required. Instead, a modular heat exchanger corresponding to the power output can be assembled. For such a system, the volume of the cooling system is not important, since the cooling capacity is stable. The same applies for a power system having a high and continuous power output.

In some power systems, the power output from the power source varies. The power output may e.g. contain short high power bursts with longer low power periods in between. In such a system, a buffer tank will provide the cooling capacity for the power burst, and the modular heat exchanger will provide the cooling capacity for the low power periods. The modular heat exchanger can thus be dimensioned for the low power periods, and the buffer tank is dimensioned for the high power periods. The buffer tank will increase the volume of the cooling system such that it will take a longer time to overheat the cooling liquid. This will allow for a smaller modular heat exchanger, which will save cost and space.

When arranging modular heat exchanger modules in parallel, the second outlet opening of a first end part of a first modular heat exchanger module is attached to the inlet opening of a first end part of a second modular heat exchanger module, and the outlet opening of a second end part of the first modular heat exchanger module is attached to the first inlet opening of the second modular heat exchanger module. In this way, a number of modular heat exchanger modules can be attached in parallel in an easy way. An end cap is used to close the unused second outlet opening of a first end part and the unused first inlet opening of a second end part.

A modular heat exchanger module may be held together in different ways. In one example, the part of a modular heat exchanger module are held together by a friction coupling between the parts and the sealings. It is also possible to provide the sleeves and/or the receiving openings with some kind of locking features, such that the parts can snap together. Internal or external clips may also be used. The same applies when attaching modular heat exchanger modules to each other. Since the main purpose of the invention is not to replace a radiator in a regular, high-volume truck, but to be used in stationary applications or in vehicles that are not exposed for large vibrations or that travels on bad roads, it may be sufficient to hold the parts together with friction force.

In one example, the first end part and the second end part are identical and are made in the same tooling, e.g. injection moulded in the same plastic tool. In this case, the inlet opening of the first end part equals the outlet opening of the second end part, the first outlet opening of the first end part equals the second inlet opening of the second end part and the second outlet opening of the first end part equals the first inlet opening of the second end part. In this way, a cost-effective modular system is provided. The first radiator section and the second radiator section are also the same and are identical. In this way, a modular heat exchanger module can be assembled by using only three different part numbers, and a complete radiator having any size can be assembled by three different part numbers. This will allow for flexible cooling systems adapted to the actual use of the power source.

By using such modular heat exchanger modules in a cooling system, it is easy to replace a radiator section when a radiator section is damaged, instead of having to replace the complete heat exchanger, or to remove the complete heat exchanger for repair.

In one example, a first end part is provided with an additional outlet opening for attaching a radiator section. The additional opening may be arranged perpendicular to the first outlet opening, and will allow radiator sections to be attached to the first end section in two directions, e.g. with a 90 degree angle. This may be advantageous for saving space.

The cooling system further comprises a fan electronic control unit (FECU). The FECU receives the regular control signal from the power source, e.g. the combustion engine, which is an on/off signal that normally starts or stops the radiator fan of a regular cooling system. This control signal is normally sent by a temperature sensor positioned at the cooling liquid outlet of the combustion engine. The FECU is arranged to control one or more cooling fans of the cooling system. The FECU may also receive more input signals, such as the temperature measured at the outlet of the heat exchanger, the ambient temperature or the temperature in the buffer tank. The FECU may control the cooling fan in a simple on/off mode, in a three state mode on/medium/off or can control the speed of the cooling fan continuously from zero to full speed.

The FECU is arranged to adapt to the number of cooling fans such that the same FECU can be used regardless of the number of modular heat exchanger modules used in the cooling system. The FECU is also arranged to control different types of cooling fans. A cooling system may e.g. comprise heat exchangers that are adapted to cool different parts of a power system. In a combustion engine system, one heat exchanger may be used to the engine cooling, one heat exchanger may be used for the charge air cooler, and one heat exchanger may be used for the climate control. The FECU can control the fans of these different heat exchangers, where the size and type of the fans may vary. Some fans may be controlled with a DC signal and some fans may be controlled with a PWM signal.

### BRIEF DESCRIPTION OF DRAWINGS

The invention will be described in greater detail in the following, with reference to the attached drawings, in which
- Fig. 1: shows a schematic vehicle provided with a cooling system according to the invention,
- Fig. 2: shows an example of a cooling system,
- Figs. 3a-d: show a first example of a modular heat exchanger module,
- Figs. 4a-d: show a second example of a modular heat exchanger module, and

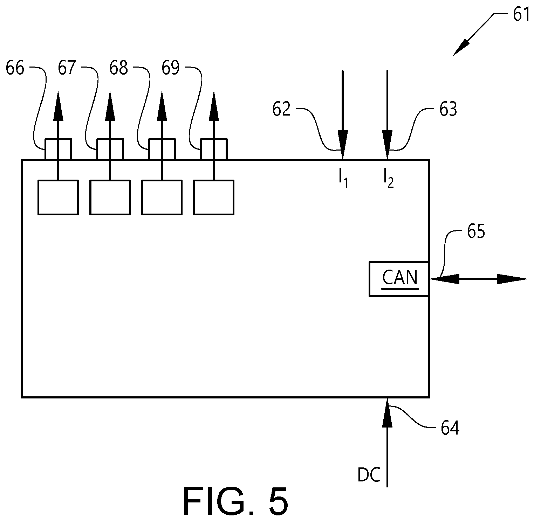

- Fig. 5: shows a schematic example of a fan electronic control unit.

### MODES FOR CARRYING OUT THE INVENTION

The embodiments of the invention with further developments described in the following are to be regarded only as examples and are in no way to limit the scope of the protection provided by the patent claims.

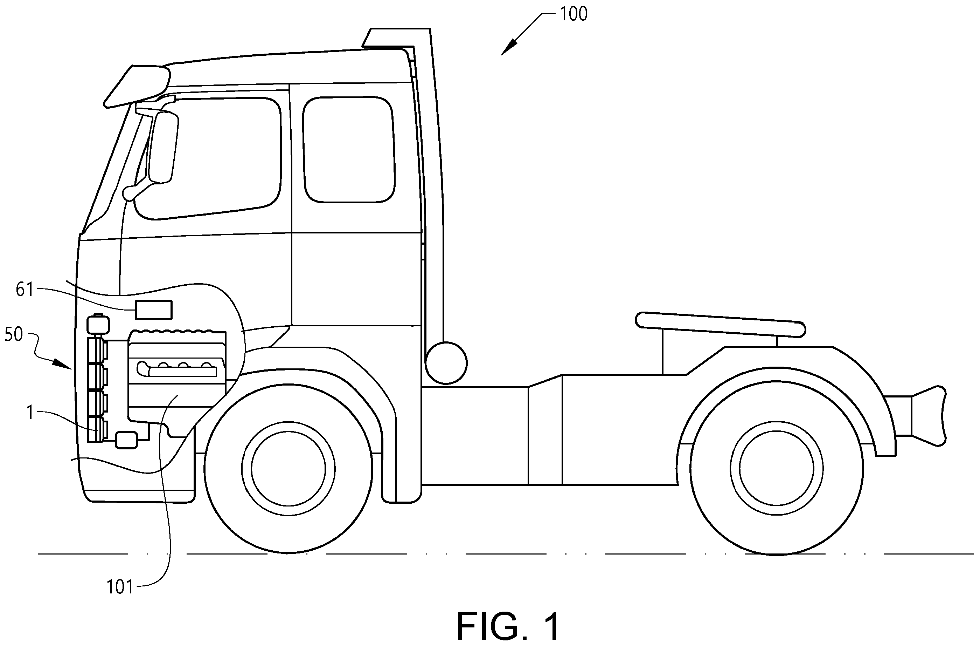

Fig.1 shows a vehicle 100 provided with a cooling system 50 comprising a modular heat exchanger 51. The shown vehicle is powered by a power source 101, in the shown example an internal combustion engine. The power source may also be an electric motor or a power cell. Regardless of the used power source, the power source will produce excessive heat that needs to be removed by the cooling system 50. The cooling system may be mounted on a vehicle, as shown in Fig. 1, or may be used in a stationary power installation, e.g. for pumps or power generators.

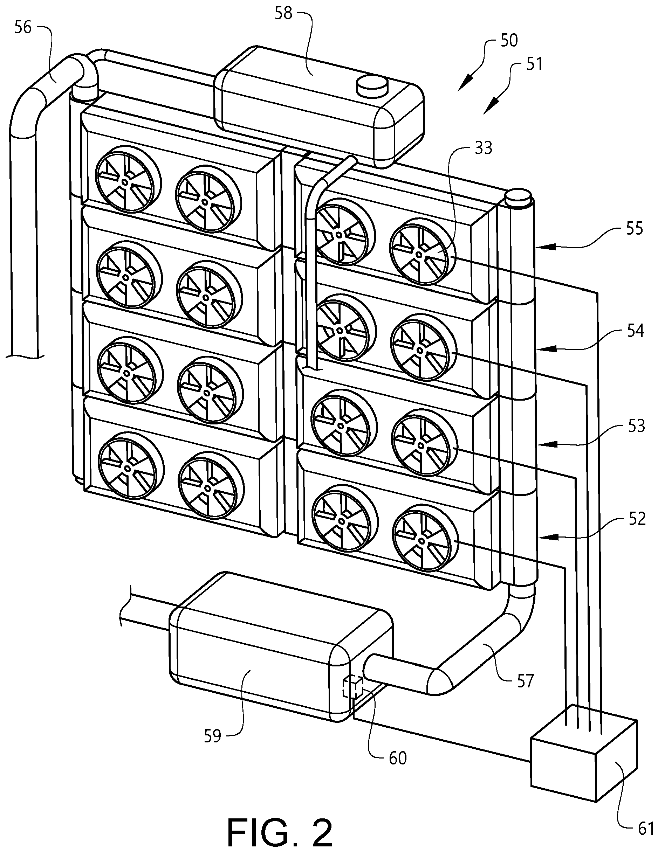

The cooling system 50, as shown in Fig. 2, comprises a modular heat exchanger 51, an inlet tubing 56, an outlet tubing 57, an expansion vessel 58 and a buffer tank 59. The inlet tubing is connected to the outlet port of the power source and forwards the heated cooling liquid from the power source to the heat exchanger. The outlet tubing is connected to the inlet port of the power source and forwards the cooled cooling liquid from the heat exchanger to the power source. The expansion vessel will compensate for pressure changes in the cooling system. The modular heat exchanger 51 consists of one or more modular heat exchanger modules 1. The buffer tank 59 is arranged in the outlet tubing between the modular heat exchanger and the power source, downstream of the modular heat exchanger. The size of the buffer tank is selected in dependency of the anticipated use of the power source, and will act as a heat buffer for short high load conditions. The buffer tank will increase the volume of the cooling system such that it will take a longer time to overheat the cooling liquid. When the power source is only used for short durations, the buffer tank will allow for a smaller heat exchanger, which will save cost and space.

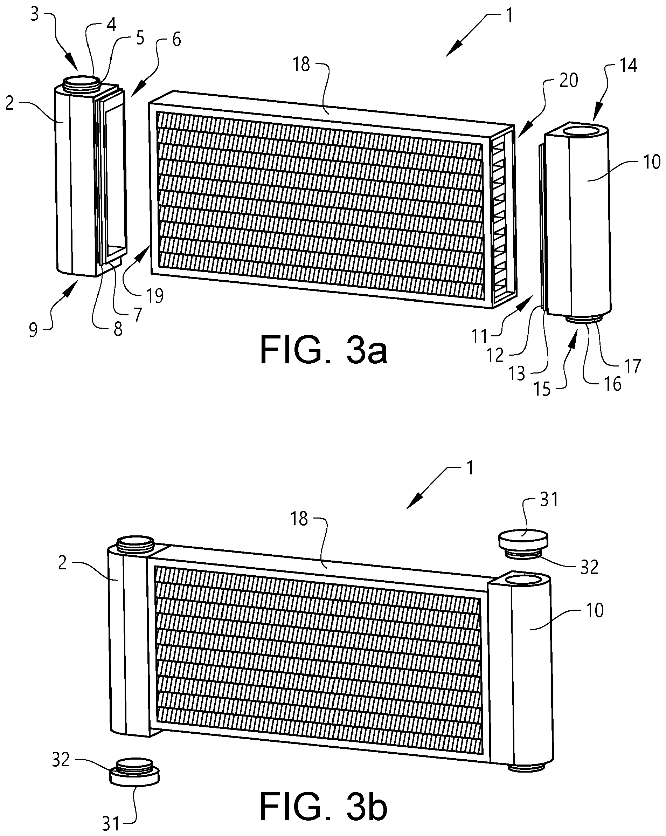

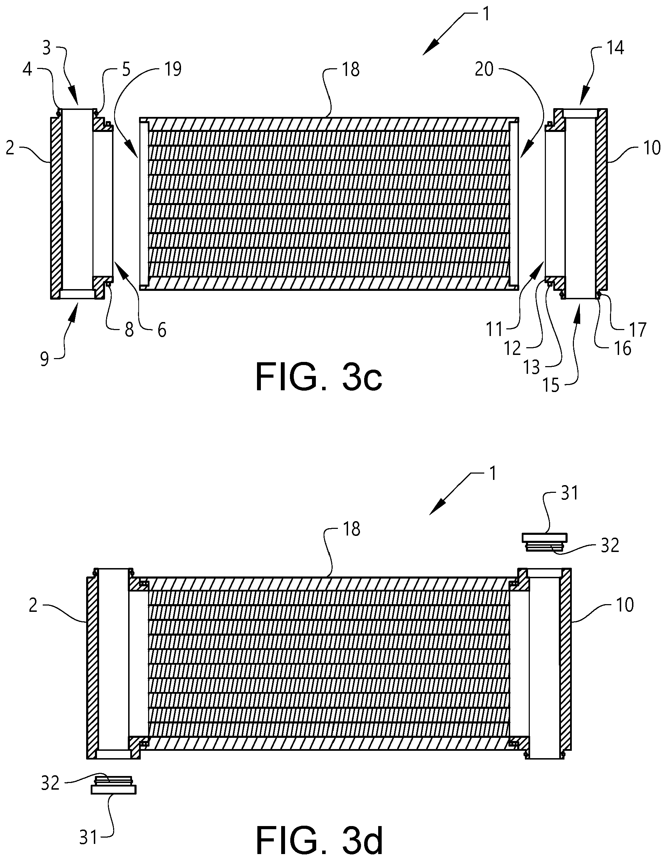

A modular heat exchanger module 1, as shown in Figs. 3a-3d, comprises a first end part 2, a first radiator section 18 and a second end part 10. The first end part 2 is provided with an inlet opening 3, a first outlet opening 6 and a second outlet opening 9. In the shown example, the inlet opening 3 is provided with a protruding sleeve 4 having a sealing 5. The inlet opening is adapted to be connected to an inlet tubing or to a second outlet opening of another first end part. The first outlet opening 6 is provided with a protruding sleeve 7 having a sealing 8. The first radiator section 18 is provided with an inlet opening 19 and an outlet opening 20. The cross section of the first radiator section is preferably rectangular. The inlet opening and the outlet opening are preferably identical, such that the mounting direction of the first radiator section is not critical. This makes it easier to assemble a modular heat exchanger and simplifies the exchange of a damaged radiator section. The inlet opening 19 is dimensioned to cooperate with the first outlet opening 6 of the first end part, such that a releasable and water tight connection between the first end part and the first radiator section is obtained.

The second end part 10 is provided with a first inlet opening 11, a second inlet opening 14 and an outlet opening 15. The first inlet opening 11 is provided with a protruding sleeve 12 having a sealing 13. The second outlet opening 15 is provided with a protruding sleeve 16 having a sealing 17. The first inlet opening 11 is adapted to cooperate with the outlet opening 20 of the first radiator section, such that a releasable and watertight connection between the second end part and the first radiator section is obtained. The outlet opening 15 is adapted to be connected to an outlet tubing or to second inlet opening of another second end part.

The first end part and the second end part are preferably identical. This reduces the number of part numbers and reduces cost and storage. In this case, the inlet opening 3 of the first end part corresponds to the outlet opening 15 of the second end part, the first outlet opening 6 of the first end part corresponds to the first inlet opening 11 of the second end part, and the second outlet opening 9 of the first end part corresponds to the second inlet opening 14 of the second end part.

A modular heat exchanger modules also comprises an end cap 31 adapted to be inserted in the second outlet opening 9 of the first end part 2 and/or the second inlet opening 14 of the second end part 10. The end cap is in the shown example a separate part provided with a sealing 32 adapted to provide a watertight connection to a first end part and a second end part. It is also possible to block the second outlet opening 9 and the second inlet opening 14 in the production tool, such that the end cap is not necessary. This will instead mean that two different end parts are necessary, which creates a further part number for an end part.

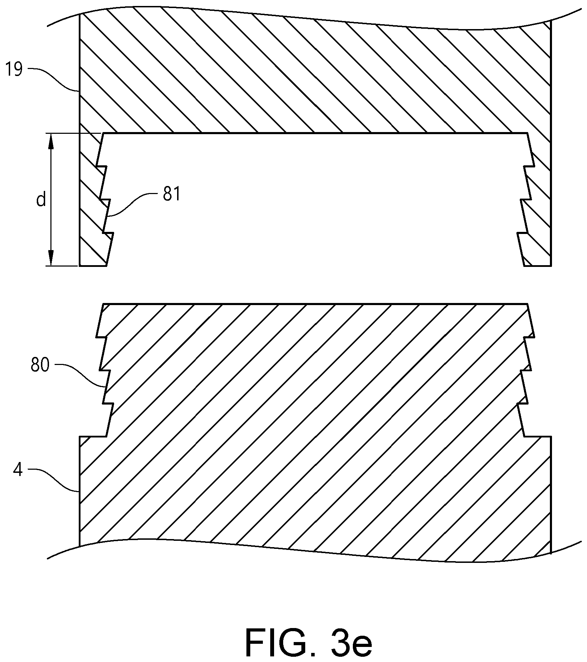

A modular heat exchanger module 1 consists of a first end part 2 releasably connected to a first radiator section 18, which is releasably connected to a second end part 10. The modular heat exchanger module may be held together in different ways. In one example, the parts of the modular heat exchanger module are held together by the friction coupling between the parts and the sealings. It is also possible to provide the sleeves and/or the receiving openings with some kind of locking features, such that the parts can snap together. Internal or external clips may also be used. The same applies when attaching modular heat exchanger modules to each other. One example of a locking feature including a snap fit is shown in figure 3e where a sleeve, such as the sleeve 4 of figure 3a, comprises external snap steps 80 and an inlet opening, such as the inlet opening 19 of figure 3a comprises internal snap steps 81. In the example of figure 3e, the external and internal snap steps have a length d of approximately 3-7 mm, specifically 5 mm. When the sleeve 4 and inlet opening 19 are brought together, a good snap locking will be provided.

The cooling system is primarily intended to be used in stationary installations or in vehicles that are not exposed to large vibrations. It may thus be sufficient to hold the parts together with friction force. It is also possible to attach the different parts with e.g. external clips or screws.

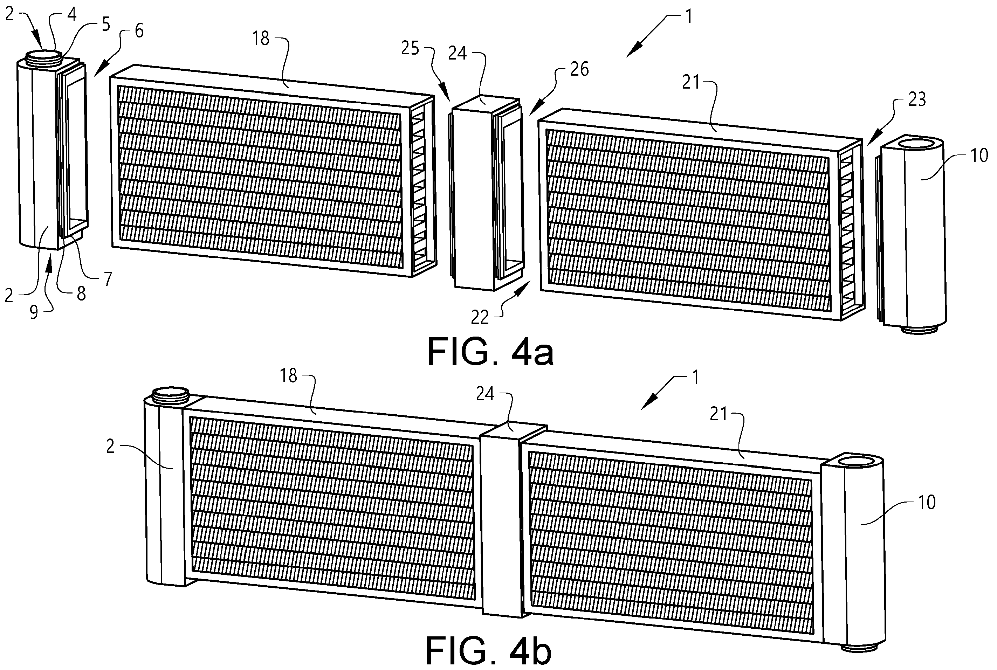

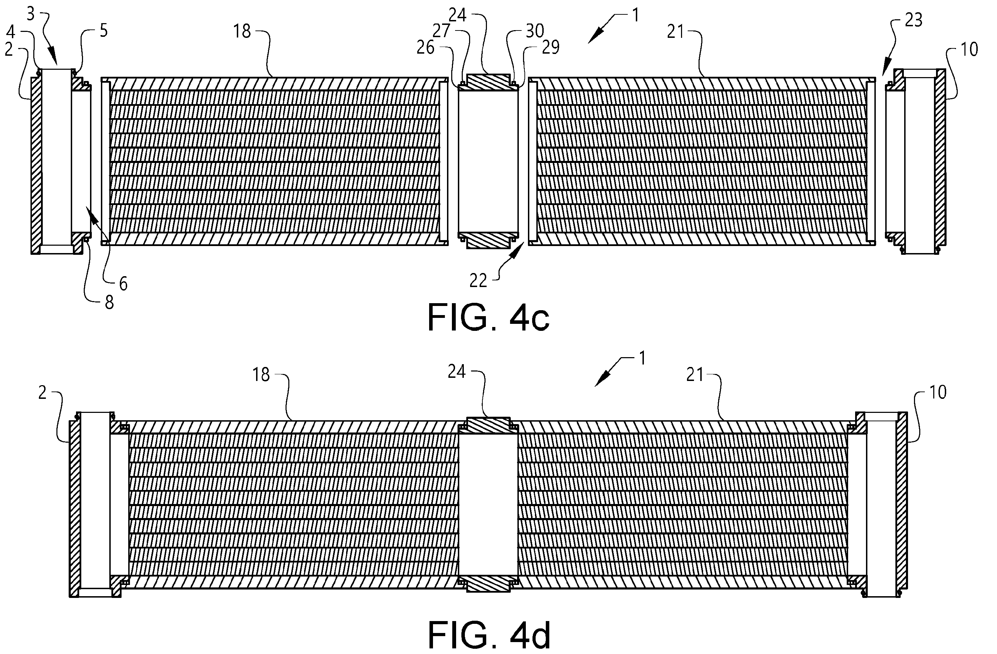

In another example, as shown in Figs. 4a-4d, a modular heat exchanger module also comprises an intermediate part 24 and a second radiator section 21. The intermediate part is provided with an inlet opening 25 and an outlet opening 28. The inlet opening 25 is provided with a protruding sleeve 26 having a sealing 27, and the outlet opening 28 is provided with a protruding sleeve 29 having a sealing 30. The second radiator section 21 is provided with an inlet opening 22 and an outlet opening 23. The cross section of the second radiator section is preferably rectangular. The inlet opening and the outlet opening are preferably identical, such that the mounting direction of the second radiator section is not critical. The first radiator section 18 and the second radiator section 21 are preferably identical, such that they may be interchanged, which reduces the part numbers of a modular heat exchanger module.

In this example, a modular heat exchanger module will consist of a first end part 2 releasably connected to a first radiator section 18, which is releasably connected to an intermediate part 24, which is releasably connected to a second radiator section 21, which is releasably connected to a second end part 10. It is also possible to connect more than two radiator sections in series in a modular heat exchanger module, by using more intermediate parts and radiator sections, such that the effective radiator surface can be increased. Heat exchanger modules can also be assembled in parallel, such that the effective radiator surface can be further increased if required. In this case, several first end parts are attached to each other, where a second outlet opening 9 of a first end part 2 is attached to an inlet opening 3 of another first end part 2, and several second end parts are attached to each other, where an outlet opening 15 of a second end part 10 is attached to a second inlet opening 14 of another second end part 10.

In one example, a first end part is also provided with an additional outlet opening for attaching a radiator section. The additional opening may be arranged perpendicular to the first outlet opening, and will allow radiator sections to be attached to the first end section in two directions, e.g. with a 90 degree angle. This may be advantageous for saving space. The additional outlet opening is identical to the first outlet opening 6, and is also provided with a protruding sleeve having a sealing such that it can be releasably attached to a radiator section.

Fig 2 shows an example of a cooling system 50 where a modular heat exchanger 51 consists of four modular heat exchanger modules, a first modular heat exchanger module 52, a second modular heat exchanger module 53, a third modular heat exchanger module 54 and a fourth modular heat exchanger module 55. Each modular heat exchanger module is provided with at least one cooling fan 33, in the shown example two cooling fans 33, arranged in a shroud 34. The shroud covers the complete surface of a radiator section, such that the fan controls the complete airflow through the radiator section. It would also be possible to arrange a larger cooling fan over e.g. two parallel modular heat exchanger modules, with the shroud covering both radiator sections.

The cooling fans 33 are controlled by a fan electronic control unit (FECU) 61 that is adapted to control each cooling fan individually. The fan electronic control unit 61 adapts to the number of used modular heat exchanger modules, i.e. to the number of connected cooling fans, and controls the cooling fans in a predefined manner. The fan electronic control unit receives a fan control signal from the power source and controls the cooling fans in dependency of the fan control signal. The fan control signal sent from a power source such as an internal combustion engine is normally an on/off signal used to turn the cooling fan on or off in a regular cooling system. The FECU may also receive other input signals, such as a temperature value from a temperature sensor. The temperature sensor may e.g. measure the temperature at the outlet of the heat exchanger, the ambient temperature or the temperature in the buffer tank. The FECU may control the cooling fan in a simple on/off mode, in a three state mode on/medium/off or can control the speed of the cooling fan continuously from zero to full speed. A temperature sensor may e.g. be positioned at the outlet of the modular heat exchanger or in the buffer tank to measure the actual temperature of the cooling liquid flowing from the heat exchanger such that the FECU can control the cooling fans according to the actual conditions. This will allow the FECU to adapt to the actual cooling needs of the power source. If the temperature of the buffer tank is measured, the FECU can respond to an increase of the temperature in the buffer tank and start the fans of the modular heat exchangers, even though the temperature of the cooling liquid from the power source in itself does not require that the fans start. In this way, control of the temperature in the buffer tank can be achieved to ensure that the cooling liquid does not reach an undesired high temperature.

Also, the FECU may be arranged to take power directly from a 12V/24V/48V DC system. This ensures that the FECU will not be a load for the engine/power source internal electrical system for powering the fans.

Additionally, the FECU may comprise a USB connection that can be used for easy configuration of the setup of the FECU.

One advantage of the inventive modular heat exchanger is that it can be assembled from any number of modular heat exchanger modules, where the modular heat exchanger modules may comprise one or more radiator sections. In this way, a heat exchanger adapted to the actual cooling needs of the power source can be obtained, depending on how the power source is used.

In one example, the power source is used in a stationary installation powering a pump. The pump runs constantly at a predefined speed, such that the power output from the power source is relatively constant. This means that the required cooling capacity for the power source is relatively constant, and will mostly vary with the ambient temperature. In this case, the size of the modular heat exchanger can be dimensioned for the actual used power of the power source, and must not be dimensioned for the maximum output power that the power source can deliver. The power source may e.g. be an internal combustion engine running at half the maximum speed. In such an example, a buffer tank is not necessary.

In another example, the power source is an internal combustion engine (ICE) mounted on a vehicle handling containers. The vehicle will lift a container and will then transport the container to a new location, where it is unloaded. The lifting of a loaded container may require full power from the ICE for a short time, whereas the transporting of the container requires only a small fraction of the full power. In this case, the heat exchanger and the buffer tank can be dimensioned for the maximal heat emitted during the full power lifting period. During the lifting of the container, the FECU can control the cooling fans to run at maximal speed during the lifting action. In this way, the cooling liquid will be cooled to a lower temperature than normal at the beginning of the lifting action, which allows the cooling liquid to collect more heat when the power source runs at full power. In this case, the FECU receives a signal corresponding to the engine speed.

The volume of the buffer tank 59 will increase the cooling capacity of the cooling system such that the total cooling liquid volume of the cooling system will absorb the heat emitted during the lifting period. Using a buffer tank may allow the cooling system to use a reduced number of radiator sections in power installations where the power source is used intermittent, with short intervals of maximum power between longer periods of low power output. With a buffer tank, the modular heat exchanger can be dimensioned for the low power output case, and the buffer tank will absorb the heat created during the maximum power output. This will save both cost and space. The volume of the buffer tank is in one example 50% of the total volume of the cooling system, but may be up to 75% of the total volume.

The FECU is arranged to adapt to the number of cooling fans such that the same FECU can be used regardless of the number of modular heat exchanger modules used in the cooling system. The FECU is also arranged to control different types of cooling fans. A cooling system may e.g. comprise heat exchangers that are adapted to cool different parts of a power system. In a combustion engine system, one heat exchanger may be used to the engine cooling, one heat exchanger may be used for the charge air cooler, and one heat exchanger may be used for the climate control. The FECU can control the fans of these different heat exchangers, where the size and type of the fans may vary. Some fans may be controlled with a DC signal and some fans may be controlled with a PWM signal.

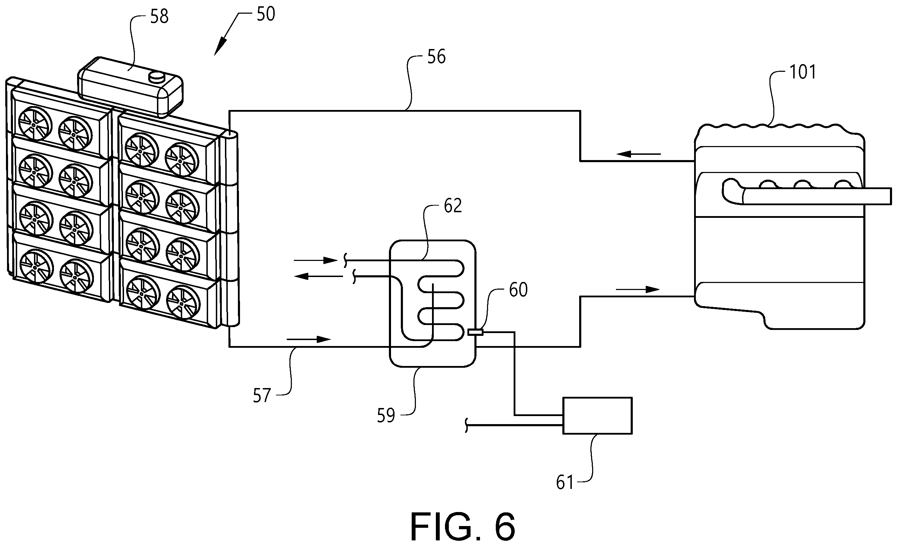

Figure 6 schematically shows an example of a cooling system according to a further embodiment. In figure 6, a buffer tank heat exchanger 62, is arranged inside the buffer tank 59. During periods with higher temperatures in the cooling liquid in the buffer tank 59, it is possible to extract heat therefrom in order to provide heat to other systems.

In a vehicle, it is possible to for instance extract heat to a cabin heating system during times when the power source is not in operation. This can for instance be valuable when the power source is turned off using a start-stop system. In this way, the power source does not need to be turned on again during longer stops, such as in queues, in order to heat the cabin or other parts of the vehicle, thus saving fuel and reducing the environmental impact.

For a vehicle, as well as for other applications described herein, the buffer tank can thus be used as a heat or energy storage where the heat can be transferred to other parts that require heating when the power source is turned off.

The invention is not to be regarded as being limited to the embodiments described above, a number of additional variants and modifications being possible within the scope of the subsequent patent claims.

### REFERENCE SIGNS

- 1:: Modular heat exchanger module
- 2:: First end part
- 3:: Inlet opening
- 4:: Sleeve
- 5:: Sealing
- 6:: First outlet opening
- 7:: Sleeve
- 8:: Sealing
- 9:: Second outlet opening
- 10:: Second end part
- 11:: First inlet opening
- 12:: Sleeve
- 13:: Sealing
- 14:: Second inlet opening
- 15:: Outlet opening
- 16:: Sleeve
- 17:: Sealing
- 18:: First radiator section
- 19:: Inlet opening
- 20:: Outlet opening
- 21:: Second radiator section
- 22:: Inlet opening
- 23:: Outlet opening
- 24:: Intermediate part
- 25:: Inlet opening
- 26:: Sleeve
- 27:: Sealing
- 28:: Outlet opening
- 29:: Sleeve
- 30:: Sealing
- 31:: End cap
- 32:: Sealing
- 33:: Fan
- 34:: Shroud
- 50:: Cooling system
- 51:: Modular heat exchanger
- 52:: First modular heat exchanger module
- 53:: Second modular heat exchanger module
- 54:: Third modular heat exchanger module
- 55:: Fourth modular heat exchanger module
- 56:: Inlet tubing
- 57:: Outlet tubing
- 58:: Expansion vessel
- 59:: Buffer tank
- 60:: Temperature sensor
- 61:: Fan electronic control unit

- 80:: External snap steps
- 81:: Internal snap steps

- 100:: Vehicle
- 101:: Power source

## Claims

1. Cooling system (50) for a power source (101), comprising a modular heat exchanger (51) comprising at least one modular heat exchanger module (1) comprising at least one fan (33), an inlet tubing (56), an outlet tubing (57) and an expansion vessel (58), where the modular heat exchanger module (1) comprises a first end part (2) releasably connected to a first radiator section (18) which is releasably connected to a second end part (10), where the modular heat exchanger module (1) is provided with an inlet opening (3) and an outlet opening (15), wherein the cooling system (50) comprises a buffer tank (59), **characterized in that** the buffer tank (59) is arranged in the outlet tubing (57) between the modular heat exchanger and the power source (101), downstream of the modular heat exchanger (51).

2. Cooling system according to claim 1, wherein a buffer tank heat exchanger (62) is arranged inside the buffer tank (59), and connected to a heat consumer outside of the cooling system (50).

3. Cooling system according to claim 1 or 2, wherein the modular heat exchanger module (1) further comprises an intermediate part (24) and a second radiator section (21), where the first radiator section (18) is releasably connected to the intermediate part (24), where the intermediate part (24) is releasably connected to the second radiator section (21) and where the second radiator section (21) is releasably connected to the second end part (10).

4. Cooling system according to any of claims 1 to 3, wherein the buffer tank (59) is dimensioned based on drive cycle analysis of the power source (101).

5. Cooling system according to any of claims 1 to 4, wherein the volume of the buffer tank (59) is at least 50% of the total volume of the cooling system (50).

6. Cooling system according to any of claims 1 to 5, wherein the volume of the buffer tank (59) is at least 75% of the total volume of the cooling system (50).

7. Cooling system according to any of claims 1 to 6, wherein the cooling system comprises a plurality of modular heat exchanger modules (1) and a plurality of fans (33).

8. Cooling system according to any of claims 1 to 7, wherein the buffer tank (59) is provided with a temperature sensor (60).

9. Cooling system according to claim 8, wherein the cooling system (50) comprises a fan electronic control unit (61) arranged to receive a fan control signal from the power source (101) and a temperature value from the temperature sensor (60), and to output a control signal to at least one fan (33) based on the fan control signal and the temperature value.

10. Cooling system according to claim 9, wherein the fan electronic control unit (61) is arranged to control each fan (33) individually.

11. Vehicle, comprising a cooling system (50) according to any of claims 1 to 10.

## Patentansprüche

1. Kühlsystem (50) für eine Energiequelle (101), umfassend einen modularen Wärmetauscher (51), der mindestens ein modulares Wärmetauschermodul (1) umfasst, das mindestens einen Lüfter (33), ein Einlassrohr (56), ein Auslassrohr (57) und ein Ausdehnungsgefäß (58) umfasst, wobei das modulare Wärmetauschermodul (1) ein erstes Endteil (2) umfasst, das lösbar mit einem ersten Radiatorabschnitt (18) verbunden ist, der lösbar mit einem zweiten Endteil (10) verbunden ist, wobei das modulare Wärmetauschermodul (1) mit einer Einlassöffnung (3) und einer Auslassöffnung (15) versehen ist, wobei das Kühlsystem (50) einen Puffertank (59) umfasst, **dadurch gekennzeichnet, dass** der Puffertank (59) in dem Auslassrohr (57) zwischen dem modularen Wärmetauscher und der Energiequelle (101), dem modularen Wärmetauscher (51) nachgelagert, angeordnet ist.

2. Kühlsystem nach Anspruch 1, wobei ein Puffertank-Wärmetauscher (62) im Innern des Puffertanks (59) angeordnet und mit einem Wärmeabnehmer außerhalb des Kühlsystems (50) verbunden ist.

3. Kühlsystem nach Anspruch 1 oder 2, wobei das modulare Wärmetauschermodul (1) ferner einen Zwischenteil (24) und einen zweiten Radiatorabschnitt (21) umfasst, wobei der erste Radiatorabschnitt (18) lösbar mit dem Zwischenteil (24) verbunden ist, wobei der Zwischenteil (24) lösbar mit dem zweiten Radiatorabschnitt (21) verbunden ist und wobei der zweite Radiatorabschnitt (21) lösbar mit dem zweiten Endteil (10) verbunden ist.

4. Kühlsystem nach einem der Ansprüche 1 bis 3, wobei der Puffertank (59) basierend auf einer Fahrzyklusanalyse der Energiequelle (101) dimensioniert ist.

5. Kühlsystem nach einem der Ansprüche 1 bis 4, wobei das Volumen des Puffertanks (59) mindestens 50 % des Gesamtvolumens des Kühlsystems (50) beträgt.

6. Kühlsystem nach einem der Ansprüche 1 bis 5, wobei das Volumen des Puffertanks (59) mindestens 75 % des Gesamtvolumens des Kühlsystems (50) beträgt.

7. Kühlsystem nach einem der Ansprüche 1 bis 6, wobei das Kühlsystem eine Vielzahl von modularen Wärmetauschermodulen (1) und eine Vielzahl von Lüftern (33) umfasst.

8. Kühlsystem nach einem der Ansprüche 1 bis 7, wobei der Puffertank (59) mit einem Temperatursensor (60) versehen ist.

9. Kühlsystem nach Anspruch 8, wobei das Kühlsystem (50) eine elektronische Lüftersteuereinheit (61) umfasst, die dazu eingerichtet ist, ein Lüftersteuersignal von der Energiequelle (101) und einen Temperaturwert von dem Temperatursensor (60) zu empfangen und ein Steuersignal an mindestens einen Lüfter (33) basierend auf dem Lüftersteuersignal und dem Temperaturwert auszugeben.

10. Kühlsystem nach Anspruch 9, wobei die elektronische Lüftersteuereinheit (61) dazu eingerichtet ist, jeden Lüfter (33) individuell zu steuern.

11. Fahrzeug, umfassend ein Kühlsystem (50) nach einem der Ansprüche 1 bis 10.

## Revendications

1. Système de refroidissement (50) pour une source de puissance (101), comprenant un échangeur de chaleur modulaire (51) comportant au moins un module d'échangeur de chaleur modulaire (1) muni d'au moins un ventilateur (33), d'une tubulure d'entrée (56), d'une tubulure de sortie (57) et d'un vase d'expansion (58), dans lequel le module d'échangeur de chaleur modulaire (1) comprend une première partie d'extrémité (2) reliée de manière amovible à une première section de radiateur (18) elle-même reliée de manière amovible à une seconde partie d'extrémité (10), dans lequel le module d'échangeur de chaleur modulaire (1) est pourvu d'une ouverture d'entrée (3) et d'une ouverture de sortie (15), et dans lequel le système de refroidissement (50) comprend un réservoir tampon (59), **caractérisé en ce que** le réservoir tampon (59) est agencé dans la tubulure de sortie (57) entre l'échangeur de chaleur modulaire et la source de puissance (101), en aval de l'échangeur de chaleur modulaire (51).

2. Système de refroidissement selon la revendication 1, dans lequel un échangeur de chaleur du réservoir tampon (62) est agencé à l'intérieur du réservoir tampon (59) et relié à un consommateur de chaleur externe au système de refroidissement (50).

3. Système de refroidissement selon la revendication 1 ou 2, dans lequel le module d'échangeur de chaleur modulaire (1) comprend en outre une partie intermédiaire (24) et une seconde section de radiateur (21), la première section de radiateur (18) étant reliée de manière amovible à la partie intermédiaire (24), la partie intermédiaire (24) étant reliée de manière amovible à la seconde section de radiateur (21), et la seconde section de radiateur (21) étant reliée de manière amovible à la seconde partie d'extrémité (10).

4. Système de refroidissement selon l'une quelconque des revendications 1 à 3, dans lequel le réservoir tampon (59) est dimensionné en fonction d'une analyse de cycle de conduite de la source de puissance (101).

5. Système de refroidissement selon l'une quelconque des revendications 1 à 4, dans lequel le volume du réservoir tampon (59) représente au moins 50 % du volume total du système de refroidissement (50).

6. Système de refroidissement selon l'une quelconque des revendications 1 à 5, dans lequel le volume du réservoir tampon (59) représente au moins 75 % du volume total du système de refroidissement (50).

7. Système de refroidissement selon l'une quelconque des revendications 1 à 6, dans lequel le système de refroidissement comprend une pluralité de modules d'échangeur de chaleur modulaire (1) et une pluralité de ventilateurs (33).

8. Système de refroidissement selon l'une quelconque des revendications 1 à 7, dans lequel le réservoir tampon (59) est pourvu d'un capteur de température (60).

9. Système de refroidissement selon la revendication 8, dans lequel le système de refroidissement (50) comprend une unité de commande électronique de ventilateur (61) agencée pour recevoir un signal de commande de ventilateur en provenance de la source de puissance (101) et une valeur de température en provenance du capteur de température (60), et pour délivrer un signal de commande à au moins un ventilateur (33) en fonction du signal de commande de ventilateur et de la valeur de température.

10. Système de refroidissement selon la revendication 9, dans lequel l'unité de commande électronique de ventilateur (61) est agencée pour commander individuellement chaque ventilateur (33).

11. Véhicule, comprenant un système de refroidissement (50) selon l'une quelconque des revendications 1 à 10.
